# EUROPÄISCHE PATENTANMELDUNG

(11) **EP 4 424 445 A1**
(43) Veröffentlichungstag der Anmeldung: **04.09.2024**
(21) Anmeldenummer: 23159630.5
(22) Anmeldetag: 02.03.2023
(51) Int. Cl.: B23B 51/02

(54) **BOHRWERKZEUG ZUM BEARBEITEN VON VERBUND- UND ANDEREN MATERIALIEN**

(71) Anmelder: Gühring KG, 72458 Albstadt (DE)
(72) Erfinder: PUTTKAMER, Ingo v., 72458 Albstadt (DE)
(74) Vertreter: Gleim, Christian Ragnar

(57) **Zusammenfassung**

Bohrwerkzeug 50 zum Bearbeiten von Verbund- und anderen Materialien, umfassend einen Schaft 59 und ein Schneidteil 55 mit:
- einer Schneidspitze 51 mit vorderseitigen Hauptschneidkanten 2,
- radial außenliegenden Nebenschneidkanten 12,
- Rundschlifffasen 25 und
- zumindest in der Nähe der Schneidspitze 51 ausgebildeten Hubschlifffasen 15; 15a, 15b mit einem Freiwinkel gegenüber einem Außenradius R des Bohrwerkzeugs 50,
- wobei die Rundschlifffasen 25 an die Nebenschneidkanten 12 angrenzen und ihnen in Drehrichtung nachlaufen und wobei die Hubschlifffasen 15; 15a, 15b an die Rundschlifffasen 25 angrenzen und ihnen in Drehrichtung nachlaufen,
- wobei die Rundschlifffasen 25 eine Fasenbreite b besitzen, die über zumindest einen Teil ihrer Länge L variiert, und
- wobei das vordere Ende 26 der jeweiligen Rundschlifffase 25 mit einer nichtkonstanten, mit zunehmender Entfernung e von der Schneidspitze 51 ansteigenden Fasenbreite bm beginnt.

## Beschreibung

Die Erfindung betrifft ein Bohrwerkzeug zum Bearbeiten von Verbund- und anderen Materialien, umfassend einen Schaft und ein Schneidteil mit
- einer Schneidspitze mit vorderseitigen Hauptschneidkanten und
- radial außenliegenden Nebenschneidkanten.

Solche Bohrwerkzeuge können Bohrer, Fräsbohrer oder beliebige sonstige Bearbeitungswerkzeuge umfassen, deren Bearbeitungswirkung auf ihrer schnellen Rotation basiert, um im jeweiligen Material ein Bohrloch mit einem bestimmten Außenradius auszubilden.

Für die durch das Bohrwerkzeug zu bearbeitende Werkstücke kommen grundsätzlich beliebige Materialien, aber insbesondere Verbundmaterialen in Betracht, beispielsweise Carbon-Faserverstärkte Kunststoffe (CFK). Diese können auch im Verbund mit Metallen vorliegen wie beispielsweise CFK/Titan.

Es gibt Bohrwerkzeuge, deren Bohrspitze in verschiedenen axialen Abschnitten, die in axialer Richtung alle hinter den Hauptschneidkanten liegen, mehrere Bohrstufen aufweist, um Bohrlochabschnitte verschiedener Außendurchmesser zu bohren, beispielsweise zweistufige Bohrwerkzeuge, bei denen ein vorderster Bohr-, Bohrer- oder Bohrlochabschnitt einen gewissen, kleineren Durchmesser hat und erst eine weiter hinten angeordnete Bohrstufe den Bohrlochabschnitt mit dem letztendlichen, größeren Bohrlochradius erzeugt. Durch die Vorbohrspitze verringerten Durchmessers kann beispielsweise die anfängliche Führung des Bohrwerkzeugs im Bohrloch erleichtert oder die an der letztendlichen Bohrlochwandung entstehende Wärme verringert werden.

Es ist die Aufgabe der vorliegenden Anmeldung, ein Bohrwerkzeug bereitzustellen, das bei der Bearbeitung Carbon-Faser-verstärkter Kunststoffe oder sonstiger Materialien an der Bohrlochspitze weniger Wärme erzeugt, aber zugleich auch die Führung im Bohroch verbessert und die gleichzeitige Erreichung dieser beiden Ziele besser oder zumindest auf andere, flexiblere Art und Weise ermöglicht als herkömmliche Bohrwerkzeuge.

Diese Aufgabe wird durch den Gegenstand des Anspruchs 1 gelöst.

Erfindungsgemäß wird ein Bohrwerkzeug mit einem Schaft und einem Schneidteil vorgeschlagen, wobei das Schneidteil weiterhin
- Rundschlifffasen sowie
- zumindest in der Nähe der Schneidspitze ausgebildete Hubschlifffasen mit einem Freiwinkel gegenüber einem Außenradius des Bohrwerkzeugs
   aufweist,
- wobei die Rundschlifffasen an die Nebenschneidkanten angrenzen und ihnen in Drehrichtung nachlaufen und wobei die Hubschlifffasen an die Rundschlifffasen angrenzen und ihnen in Drehrichtung nachlaufen,
- wobei die Rundschlifffasen eine Fasenbreite besitzen, die über zumindest einen Teil ihrer Länge variiert, und
- wobei das vordere Ende der jeweiligen Rundschlifffase mit einer nicht-konstanten, mit zunehmender Entfernung von der Schneidspitze monoton ansteigenden Fasenbreite beginnt.

Rundschlifffasen sind Fasen, die gemäß dem Außenradius des Bohrlochs, d.h. seiner umfangsseitigen Bohrlochwandung geformt sind. An herkömmlichen Bohrwerkzeugen sind sie meist in einem axial hinter der Schneidspitze nachfolgenden Führungsabschnitt zu finden und dienen zur Führung, nachdem die Schneidspitze bereits in das zu bearbeitende Material eingedrungen ist.

Statt als Rundschlifffasen sind umfangsseitige Flächen auch als Hubschlifffasen formbar; diese besitzen gegenüber der Bohrlochwandung, d.h. gegenüber einem Außenradius des Bohrwerkzeugs einen Freiwinkel.

Auch erfindungsgemäß ist eine Hubschlifffase zumindest in der Nähe der Schneidspitze ausgebildet. Erfindungsgemäß ist weiterhin vorgesehen, dass die Rundschlifffase an die Nebenschneidkanten angrenzt und ihr in Drehrichtung nachläuft und dass die Hubschlifffase an die Rundschlifffase angrenzt und ihr in Drehrichtung nachläuft.

Ferner ist erfindungsgemäß vorgesehen, dass die Rundschlifffase eine Fasenbreite besitzt, die über zumindest einen Teil ihrer Länge variiert.

Schließlich ist erfindungsgemäß noch vorgesehen, dass das vordere Ende der jeweiligen Rundschlifffase mit einer nicht-konstanten, mit zunehmender Entfernung von der Schneidspitze ansteigenden Fasenbreite beginnt.

Hierdurch entsteht eine neuartige Kombinationswirkung von Rundschliff- und Hubschlifffase, die
- an der bzw. dicht hinter der Schneidspitze zunächst ein hohes Ausmaß an Wärmevermeidung - verbunden mit zunächst nur schwacher Führung im Bohrloch - bewirkt,
- weiter hinten jedoch eine stabile Führung im Bohrloch - mit geringerer Ableitung von Wärme - bewirkt und
- dazwischen einen kontinuierlichen Übergang zwischen anfänglich starker Wärmevermeidung und zunehmend stabiler Führung im Bohrloch bewirkt.

Erfindungsgemäß variiert die Fasenbreite der Rundschlifffase, und zwar vorzugsweise so, dass die Rundschlifffase an ihrem vorderen Ende bzw. dem vordersten Ende mit einer nicht-konstanten, mit zunehmender Entfernung von der Schneidspitze monoton ansteigenden Fasenbreite beginnt. Die Rundschlifffase wird von an ihrem vordersten Ende aus - mit zunehmender Entfernung von der Schneidspitze, d.h. in Richtung der negativen axialen Richtung entgegengesetzt zur Vorschubrichtung beim Bohren oder anderseitigen Bearbeiten - somit zunächst nach hinten breiter.

Diese Verbreiterung der Rundschlifffase bzw. Vergrößerung ihrer Fasenbreite beginnt erfindungsgemäß unmittelbar am axial vorderen Ende der Rundschlifffase (d.h. dem vordersten Ende der Rundschlifffase in axialer Richtung); unabhängig davon, wie der weitere Verlauf der Fasenbreite weiter hinten entlang der Rundschlifffase aussehen mag. Somit ist erfindungsgemäß - beginnend am vordersten Ende der Rundschlifffase - ein monoton ansteigender, nicht-konstanter Verlauf der Fasenbreite der Rundschlifffase vorgesehen, und zwar unabhängig davon, wie groß am vorderen Ende selbst der Anfangswert der Fasenbreite ist.

Der Anfangswert der Fasenbreite am vorderen bzw. vordersten Ende der Rundschlifffase kann wahlweise ein endlicher Wert bzw. Anfangswert oder der Wert Null sein. Im zweiten Fall liegt ein spitzes vorderes Ende der Rundschlifffase vor.

Entscheidend ist lediglich, dass vom diesem Anfangswert aus - in axial negativer Richtung entgegengesetzt zur Schneidspitze, d.h. mit zunehmender axialer Entfernung von der Schneidspitze bzw. von ihrer jeweiligen Hauptschneidkante - die Fasenbreite zunächst zunimmt.

Diese Breitenzunahme, die sich über einen vorgegebenen Längenabschnitt der Rundschlifffase erstrecken kann, bewirkt in Kombination mit der nachlaufenden Rundschlifffase, dass eine stufenlos, d.h. kontinuierlich variierte Kombinationswirkung erreicht wird, die
- am vorderen Ende der Rundschlifffase das zunächst hohe Ausmaß an Wärmevermeidung - verbunden mit zunächst nur schwacher Führung im Bohrloch - gewährleistet,
- weiter hinten die stabile Führung im Bohrloch - mit vergleichsweise geringer Ableitung von Wärme - gewährleistet und
- dazwischen den kontinuierlichen Übergang zwischen anfänglicher Wärmevermeidung und zunehmend stabiler Führung im Bohrloch erzielt.

Die auf diese Weise variierte Fasenbreite der Rundschlifffase, die der Nebenschneidkante nachläuft, bewirkt in Kombination mit der der Rundschlifffase nachlaufenden Hubschlifffase, dass der Effekt der Wärmevermeidung durch die Hubschlifffase in Drehrichtung um so näher hinter der Nebenschneidkante bzw. um so näher nachlaufend zur Nebenschneidkante einsetzt, je kleiner die Entfernung von der Schneidspitze bzw. von der vorderseitigen Hauptschneidkante ist.

Die Rundschlifffase bewirkt an ihrem vorderen Ende eine anfänglich (bzw. vorne) zunächst nur moderate Führung in dem Bohrloch, während die nachlaufende Hubschlifffase einen leichten Abtransport der Späne - oder auch der Fasern bei Verbundmaterialien wie CFK oder CFK/Metall wie etwa CFK/Titan - ermöglicht.

Infolge des unmittelbar danach folgenden Anstiegs der Fasenbreite der Rundschlifffase verschiebt sich diese Kombinationswirkung mit zunehmender axialer Entfernung von der Schneidspitze bzw. ihrer Hauptschneidkante hin zu zunehmend stärkerer Führung im Bohrloch bei gleichzeitig abgeschwächter Wärmevermeidung, da der Abtransport der Späne bzw. Fasern durch die Hubschlifffase erst hinter der zunehmend breiter werdenden Rundschlifffase beginnt.

Über den Bereich der Fasenverbreiterung der Rundschlifffase, also beispielsweise über einen vorderen bzw. den vordersten (ersten) Längenabschnitt wird somit eine Kombinationwirkung aus Führungsstabilität und Wärmeabfuhr erzielt, bei der das relative Verhältnis von Führungsstabilität und Wärmeabfuhr zueinander über diesen Längenabschnitt variiert und sich kontinuierlich in Richtung höherer Führungsstabilität auf Kosten der Wärmeabfuhr verlagert.

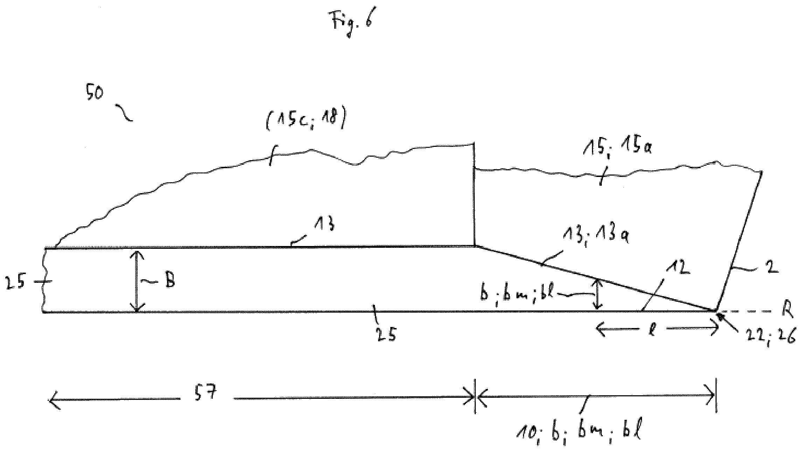

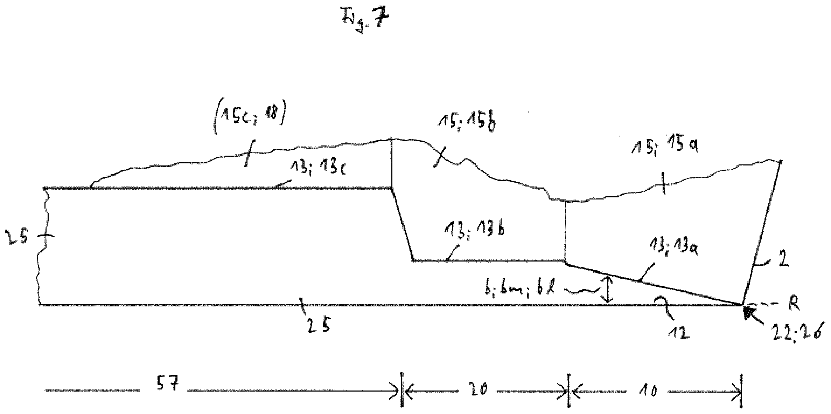

Die Fasenbreite der Rundschlifffase kann insbesondere mit zunehmender Entfernung (der betrachteten Querschnittfläche durch das Bohrwerkzeug bzw. der betrachteten Schnittlinie entlang der Breite der Rundschlifffase) von der Schneidspitze bzw. ihrer Hauptschneidkante linear ansteigen; insbesondere auch proportional zu dieser Entfernung. Mit "Entfernung" ist nicht der Abstand der Rundschlifffase insgesamt bzw. ihres vorderen Endes von der Schneidspitze bzw. Hauptschneidkante gemeint, sondern die in Axialrichtung gemessene Koordinate bzw. Längskoordinate (insbesondere entlang der Länge der Rundschlifffase), in Abhängigkeit von welcher sich die Fasenbreite der Rundschlifffase angeben und zeichnerisch darstellen lässt (vgl. die Figuren 6 und 7).

Vorzugsweise ist das vordere bzw. vorderste Ende der Rundschlifffase an der Außenecke der Hauptschneidkante der Schneidspitze angeordnet.

Weiterhin kann die Rundschlifffase mit einem spitzen vorderen Ende beginnen, d.h. mit einem Anfangswert der Fasenbreite von Null (mm oder cm).

Insbesondere kann vorgesehen sein, dass
- sowohl eine Ecke der jeweiligen ersten Hubschlifffase als auch
- das spitze Fasenende der jeweiligen Rundschlifffase
an der Außenecke der jeweiligen Hauptschneidkante angeordnet ist.

Hierbei entsteht die variierte Kombinationswirkung bereits unmittelbar am äußeren Ende bzw. der Ecke der jeweiligen Hauptschneidkante, und durch das spitze Ende der Rundschlifffase wird zudem eine größtmögliches Bandbreite für eine Verlagerung der Kombinationswirkung - von zunächst maximaler Wärmevermeidung hin zu zunehmend stabiler Führung - schaffen.

Hierbei ist eine jeweilige Rundschlifffase vorgesehen, die so gestaltet ist, dass sie nach vorne bis zur Schneidspitze, insbesondere nach vorne bis zur Hauptschneide bzw. deren äußerer Ecke durchläuft. Die durchlaufende jeweilige Rundschlifffase beginnt somit an der Außenecke der jeweiligen Hauptschneidkante.

Wenn in der Anmeldung von "jeweiligen" oder von mehreren Hauptschneidkanten, Nebenschneidkanten, Rundschlifffasen oder Hubschlifffasen etc. die Rede ist, berücksichtigt dies den Umstand, dass an einem Bohrwerkzeug in Umfangsrichtung immer zwei oder mehr dieser Elemente angeordnet, d.h. in Umfangsrichtung verteilt sind; beispielsweise zwei Stück in einem Winkel von 180° zueinander verdreht und somit auf entgegengesetzten Seiten des Querschnitts des Bohrwerkzeugs angeordnet. Alle Ausführungsformen von Bohrwerkzeugen dieser Anmeldung können mit zweizähliger oder allgemein N-zähliger Drehsymmetrie, d.h. mit jeweils zwei oder N (für N > 2) jeweiligen Hauptschneidkanten, Nebenschneidkanten, Rundschlifffasen oder Hubschlifffasen etc. versehen sein.

Zeichnet man eine Querschnittsfläche durch das Bohrwerkzeung in axialer Längenposition der Außenecke der Hauptschneidkante, so beginnt dort zwar schon die durchlaufende Rundschlifffase; dennoch ist die Gesamtwirkung in dieser Höhe diejenige einer Hubschlifffase, weil dort der Anfangswert der Fasenbreite der Rundschlifffase Null (mm oder cm) beträgt und somit auch die nachlaufende Hubschlifffase bis an die Außenecke der Hauptschneidkante heranreicht.

Bei dieser bevorzugten Ausführungsform reicht somit die nachlaufende Rundschlifffase - zumindest an dieser Außenecke - zugleich auch an das vorderste Ende der (jeweiligen) vorauslaufenden Nebenschneidkante heran. Dadurch wird unmittelbar an der Schneidspitze bzw. Hauptschneidkante ein Einklemmen von Spänen oder Fasern vermieden, aber dennoch unmittelbar dahinter durch die endliche Fasenbreite der Rundschlifffase eine gewisse, wenngleich noch moderate Führungsstabilität im Bohrloch erreicht.

Fertigungstechnisch ist diese Ausführungsform beispielsweise dadurch realisierbar, dass im Bereich der Außenecke der jeweiligen Hauptschneidkante die vorauslaufende Spannut auf Kosten der Fasenbreite der Rundschlifffase in Richtung der nachlaufenden ersten Hubschlifffase verbreitert ist. Beispielsweise können im Bereich der Außenecke der jeweiligen Hauptschneidkante die Hauptschneidkante und die Nebenschneidkante in Richtung der nachlaufenden ersten Hubschlifffase gekrümmt sein.

Optional kann zwischen dem (ersten) Längenabschnitt, über den sich die monotone bzw. lineare Verbreiterung der Fasenbreite der Rundschlifffase erstreckt, und einem Führungsabschnitt, der den Mittelteil des Bohrwerkzeugs ausmacht, noch ein zweiter Längenabschnitt vorgesehen sein, in dem die Fasenbreite größer als im ersten Längenabschnitt, aber kleiner als im Führungsabschnitt ist.

Durch die erfindungsgemäß erreichte Kombinationswirkung von Rundschliff- und Hubschlifffase an den Nebenschneidkanten der Schneidspitze - mit immer weiter verlagertem Wirkungsverhältnis, je größer entlang der Nebenschneidkante die axiale Entfernung von der Hauptschneidkante bzw. von deren Außenecke wird - lassen sich die verschiedenen, teils gegensätzlichen Anforderung bei der Bearbeitung eines Werkstücks besser oder jedenfalls flexibler miteinander vereinen als bei herkömmlichen Bohrwerkzeugen.

Einige exemplarische Ausführungsbeispiele werden nachstehend anhand der Figuren erläutert. Es zeigen:
- Figur 1: eine schematische Vorderansicht einer exemplarischen Ausführungsform des erfindungsgemäßen Bohrwerkzeugs,
- Figur 2: eine vergrößerte Detailansicht aus Figur 1,
- Figur 3: eine perspektivische Ansicht einer exemplarischen Ausführungsform eines erfindungsgemäßen Bohrwerkzeugs,
- Figur 4: eine vergrößerte perspektive Detailansicht zu Figur 4,
- Figur 5: eine schematische Seitenansicht eines Bohrwerkzeugs,
- Figur 6: einen ersten exemplarischen Verlauf der Fasenbreite der on Rundschlifffasen gemäß einer weiteren, vereinfachten Ausführungsform des erfindungsgemäßen Bohrwerkzeugs und
- Figur 7: einen alternativen, zweiten exemplarischen Verlauf der Fasenbreite der Rundschlifffasen aus oder ähnlich wie in Figur 3 und 4 oder einer sonstigen Ausführungsform des erfindungsgemäßen Bohrwerkzeugs.

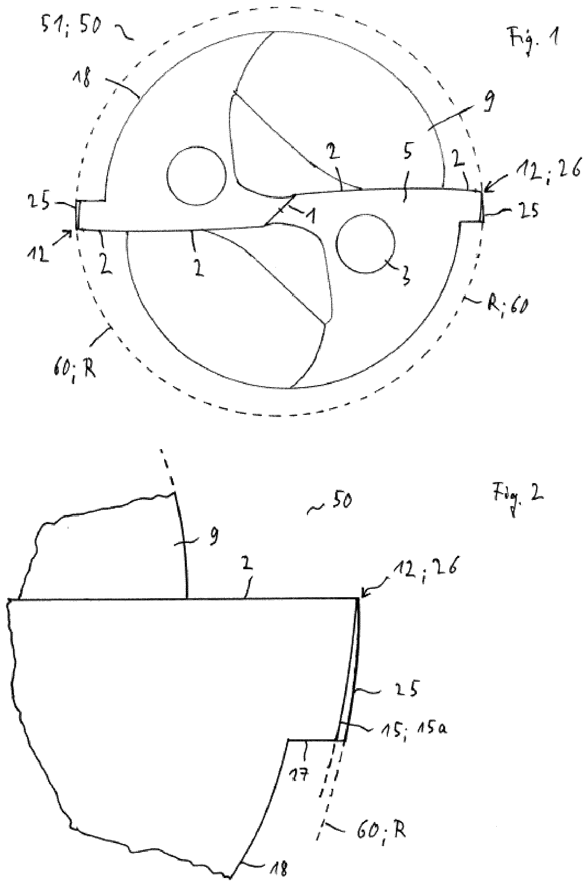

Figur 1 zeigt eine schematische Vorderansicht eines Bohrwerkzeugs 50 mit Blick frontal auf die Schneidspitze 51, d.h. aus Richtung der Drehachse A, die zugleich die Symmetrieachse für die Bohrlochwandung 60 des mit dem Bohrwerkzeug 50 gebohrten Bohrlochs bildet. Von dort aus führt eine vordere Querschneide 1 zu vorderseitigen Hauptschneiden bzw. Hauptschneidkanten 2. Weiterhin sind Nebenschneidkanten 12 vorgesehen, die an dem Umfangsabschnitt der Bohrlochwandung 60 anliegen. Die ihnen nachfolgenden Außenflächen sind erfindungsgemäß als Hubschlifffasen 25 ausgebildet, die dem Außenradius R des Bohrwerkzeugs bzw. der damit gebohrten Bohrlochwandung 60 folgen.

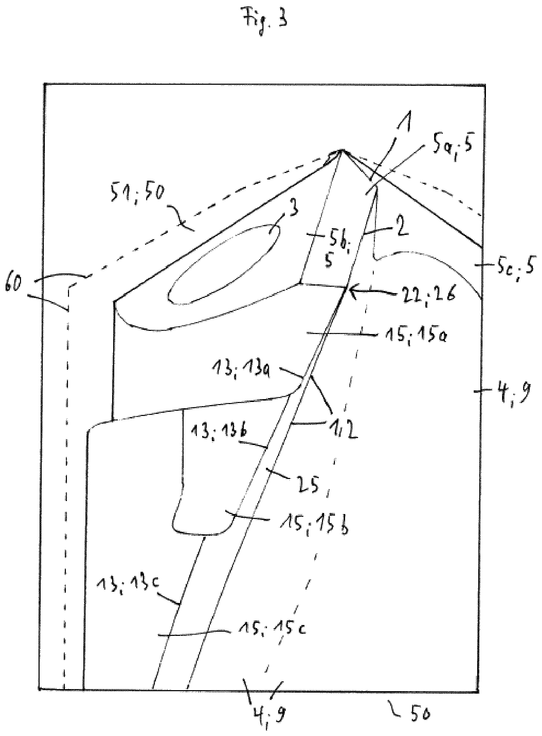

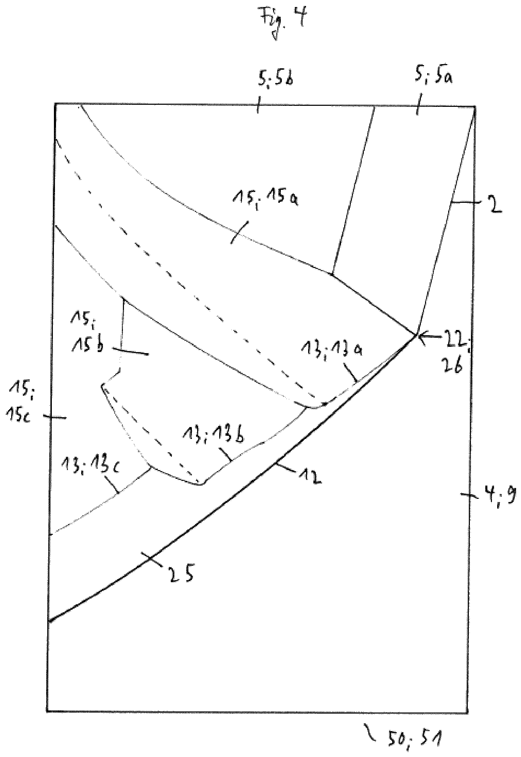

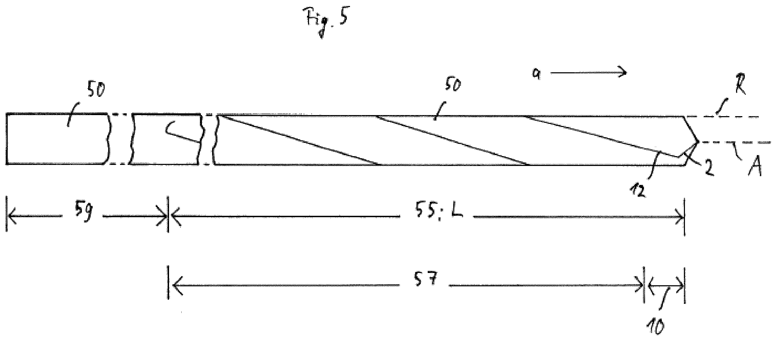

Optional können die Hubschlifffasen 25, wie in Figur 1 und ausschnittweise vergrößert in Figur 2 dargestellt, gegenüber azimutal nachlaufenden Umfangsflächen bzw. Grundflächen radial erhöht, insbesondere durch eine Stufe 17 radial freigestellt sein; insbesondere in Höhe eines Führungsabschnitts 57 (vgl. Figur 5) des Bohrwerkzeugs, dessen Querschnitt bzw. Außenumfang in Figur 1 gemäß einer von mehreren denkbaren Ausführungsgeispielen dargestellt ist. Alternativ können den Hubschlifffasen 25 in Drehrichtung nachlaufende Flächen oder Fasen, insbesondere Hubschlifffasen sich auch ohne Stufe an die Hubschlifffasen 25 anschließen; insbesondere können sie direkt an eine jeweilige Kante 13 (vgl. die Figuren 3 und 4) der jeweiligen Rundschlifffase 25 angrenzen. Sofern eine Stufe 17 vorhanden ist, kann ihre Breite der maximalen Fasenbreite bzw. Grundbreite B der Rundschlifffasen 25 in Höhe des Führungsabschnitts 57 entsprechen.

In den Figuren 1 und 2 befinden sich die Rundschlifffasen 25 nachlaufend nach, d.h. azimutal hinter den Nebenschneidkanten 12. Den Rundschlifffasen 25 wiederum nachlaufende Hubschliffasen 15; 15a sind in Figur 2 nur im Bereich der (letztendlichen) Fasenbreite der Rundschlifffase 25 erkennbar; sie besitzen einen Freiwinkel gegenüber dem Außenradius R des Bohrwerkzeugs 50 bzw. der Bohrlochwandung 60. Die Hubschliffasen 15; 15a können insbesondere in einem vordersten, ersten Längenabschnitt vorgesehen sein, in welchem die jeweilige Rundschlifffase 25 von ihrem vorderen bzw. vordersten Ende aus eine mit zunehmender axialer Entfernung von der Hauptschneidkante 2 zunehmende Fasenbreite besitzt.

Die in Figur 1 gezeigte Vorderansicht zeigt lediglich eine einzige vorderseitige Freifläche 5 pro Hauptschneidkante 2. In der Praxis jedoch sind meist zwei oder drei vorderseitige Freiflächen 5a, 5b, ... vorgesehen (vgl. Figur 3). Diese Freiflächen sind vorderseitige Freiflächen; sie bleiben beim Bohren bzw. beim Schnitt hinter der durch die Hauptschneidkante 2 und die Querschneide 1 vorläufig geschnittenen Vorderwand zurück. Durch Kanalaustrittsöffnungen 3 in vorderseitigen Freiflächen 5; 5b (Figuren 1 und 3) wird beim Bohren oder anderweitigen Bearbeiten des Werkstücks flüssiger Kühlschmierstoff in das Bohrloch bzw. in die erzeugte Ausnehmung hineingepresst, der die Temperatur und/oder Reibung herabsetzt. Zwischen den mehreren azimutal, d.h. in Umfangsrichtung verteilten Schneiden verlaufen Spannuten 9 bzw. deren als umfangsseitige Vertiefungen geformte Spanflächen zum Abführen der Späne und/oder Fasern des ausgebohrten Materials und des verbrauchten Kühlschm ierstoffs.

Bei der Bearbeitung rotieren die Nebenschneidkanten 12 am umfangsseitigen Seitenwandabschnitt der Bohrlochwandung 60. In Umfangs- bzw. Drehrichtung läuft jeder Nebenschneidkante 12 - zumindest im Führungsabschnitt 57 - eine Rundschlifffase 25 auf dem Außenradius R, d.h. in unmittelbarem Kontakt mit der Bohrlochwandung 60 nach. Das Nachlaufen bezieht sich auf die Drehrichtung, die üblicherweise im Uhrzeigersinn erfolgt, und zwar bei Draufsicht auf das gebohrte Werkstück betrachtet, d.h. entgegengesetzt zu der in Figur 1 dargestellten Vorderansicht 1.

Erfindungsgemäß besitzt die jeweilige Rundschlifffase 25 eine über ihre Länge variable Fasenbreite und ein vorderes Ende 26, von dem aus beginnend die Fasenbreite zunächst anwächst, d.h. zunimmt. Dies kann eine monotone, insbesondere streng monotone Zunahme der Fasenbreite sein; beispielsweise eine lineare Zunahme der Fasenbreite. Die Koordinate, relativ zu der die lineare oder anderweitige Abhängigkeit der Zunahme der Fasenbreite besteht, kann die in Axialrichtung gemessene (oder alternativ schräg, d.h. gemäß einem Spiral- oder Drallwinkel verlaufende) Entfernung von der Außenecke der Hauptschneide 2 sein.

Eine exemplarische Ausführungsform eines solchen erfindungsgemäßen Bohrwerkzeugs 50 ist beispielsweise in Figur 3 und - in vergrößerter Detailansicht - in Figur 4 perspektivisch dargestellt. Am vorderen bzw. vordersten Ende 26 der Rundschlifffase 25 beginnt der Breitenverlauf der erfindungsgemäß variablen Fasenbreite b mit einem Anstieg, insbesondere mit einem monotonen und beispielsweise linearen Anstieg der Fasenbreite.

Wie in Figur 3 und 4 weiterhin dargestellt ist das vordere bzw. vorderste Ende 26 der Rundschlifffase 25 vorzugsweise an der Außenecke 22 der Hauptschneidkante 2 der Schneidspitze 51 angeordnet.

Weiterhin kann die jeweilige Rundschlifffase 25 wie dargestellt mit einem spitzen vorderen Ende 26 beginnen, d.h. mit einem Anfangswert der Fasenbreite von Null (mm oder cm).

Vorzugsweise kann zudem dieses vordere, spitze Fasenende 26 der Rundschlifffase 25 an der Außenecke 22 der Hauptschneidkante 2 angeordnet sein. Hierbei wird eine besonders große Bandbreite für die Variation bzw. Verlagerbarkeit der erfindungsgemäßen Kombinationswirkung erzielt. Insbesondere läuft der Rundschlifffase 25 eine vorderste, erste umfangsseitige Hubschlifffase 15; 15a nach. Im Falle eines spitzen Endes 26 der Rundschlifffase 25 reicht auch die Hubschlifffase 15; 15a mit einer Ecke bis an die Außenecke 22 der Hauptschneidkante 2 (und somit auch bis an die Nebenschneidkante 12) heran.

Die jeweilige Rundschlifffase 25 erstreckt sich gemäß Figur 3 und 4 nicht nur über den Führungsbereich 57 (vgl. Figur 5), sondern reicht bis zur Schneidspitze; nämlich bis zur Außenecke 22 der Hauptschneidkante 2. Die Rundschlifffase 25 besitzt somit eine Länge L (vgl. Figur 5), die bis zu den Hauptschneiden 2 reicht.

Die Schneidspitze 51 umfasst außer den Hauptschneiden 2 ansonsten noch die Querschneide 1, und jeder Hauptschneide 2 laufen in der Regel eine oder mehrere vorderseitige Freiflächen 5; 5a; 5b; 5c nach, in denen teils auch die Kanalaustrittsöffnungen 3 für den Kühlschmierstoff liegen können.

Die Nebenschneidkante 12 bildet die Grenze zwischen der Rundschlifffase 25 und der ihr vorauslaufenden Spannut 9 bzw. Spanfläche 4; in Figur 3 deutet die gestrichelte Linie innerhalb der Spanfläche 4 ihr konkaves dreidimensionales Profil an. Das in Figur 3 dargestellte untere Drittel des dargestellten Ausschnitts des Bohrwerkzeugs 50 gehört zum Führungsbereich 57, in dem die Rundschlifffase 25 ihre maximale Fasenbreite bzw. Grundbereite B besitzt (vgl. Figur 7). Zumindest das oberste Drittel des dargestellten Fasenabschnitts, welches am axial vordersten Fasenende beginnt, bildet einen ersten Längenabschnitt 10 der Rundschlifffase 25, in dem die Fasenbreite - beginnend mit dem Anfangswert der Fasenbreite (hier von Null) am vordersten Fasenende - mit zunehmender Entfernung e von der Hauptschneidkante 2 bzw. von deren Außenecke 22 zunimmt, d.h. ansteigt. In diesem (ersten) Längenabschnitt 10 der Rundschlifffase 25 folgt der Rundschlifffase 25 eine an sie angrenzende erste Hubschlifffase 15, 15a nach, die mit der Rundschlifffase 25 eine gemeinsame (erste) Kante 13; 13a besitzt. Durch das spitze Vorderende 26 der Rundschlifffase 25 reicht die erste Hubschlifffase 15, 15a ebenfalls bis an die Außenecke 22 der Hauptschneidkante 2 heran.

Durch das spitze Ende der Rundschlifffase 25 wird ein Einklemmen von Spänen zwischen der umfangsseitigen Bohrlochwandung 60 und dem Außenumfang des Bohrwerkzeugs 50 verhindert, da die Hubschlifffläche 15; 15a hier bereits an der Außenecke 22 bzw. am vorderen Ende der Nebenschneidkante 2 beginnt. Ein etwaiges Einklemmen von Spänen wird zusätzlich auch durch den spitzen bzw. spitzwinkligen Verlauf der Fasenbreite insgesamt im ersten, vordersten Längenabschnitt 10 (mit einem Winkel zwischen der Nebenschneidkante 12 und der nachlaufenden Kante 13; 13a kleiner als 45°, vorzugsweise kleiner als 20° und insbesondere kleiner als 10°) weiter erschwert.

Da anderseits auch die Rundschlifffase 25 bis nach vorne zur Hauptschneidkante 2 bzw. bis zu deren Außenecke 22 durchläuft, wird bereits hier - am vordersten Ende der Nebenschneidkante 22 und somit am vordersten Ende der umfangsseitigen Bohrlochwandung 60 - eine gewisse Führungsstabilität im Bohrloch erreicht, deren Ausmaß über die axiale Länge des ersten Längenabschnitts 10 kontinuierlich zunimmt.

Vorzugsweise sind somit eine Ecke der ersten Hubschlifffase 15; 15a sowie das spitze Fasenende 26 der Rundschlifffase 25 an der Außenecke 22 der Hauptschneidkante 22 angeordnet, wodurch die besonders große Bandbreite für die Variation der Verlagerung der Kombinationswirkung speziell über die Länge der Rundschlifffase 25, insbesondere ihres ersten Längenabschnitts 10 ermöglicht wird; beginnend mit zunächst maximaler Wärmevermeidung hin zu (vorläufig) größtmöglicher Führungsstabilität im Bohrloch.

Dort, wo in den Figuren 3 und 4 die Außenkontur des Bohrwerkzeugs 50 hinter der gestrichelt markierten Bohrlochwandung 60 zurückbleibt, ist dies die Folge der Spannuten 9 bzw. konkaven Spanflächen 4, der übrigen vorderseitigen und umfangsseitigen Aussparungen sowie der jeweiligen Betrachtungsperspektive, die in Figur 4 gegenüber Figur 3 leicht verändert ist und stärker aus der Richtung von vorne erfolgt.

In Figur 4 ist die Umgebung der Außenecke 22 der Hauptschneidkante 2, insbesondere im Bereich der Nebenschneidkante 12 und der ihr nachlaufenden Flächen und Kanten dargestellt, umfassend die Rundschliffase 25, die (erste) Hubschlifffase 15; 15a sowie weiterhin eine zweite und dritte Hubschliffase 15; 15b; 15c. Die erste Hubschlifffase 15a grenzt in einem ersten Längenabschnitt 10 an die Rundschliffase 25 an und besitzt mit ihr eine gemeinsame erste Kante 13; 13a.

Optional kann ein zweiter Längenabschnitt 20 der Rundschliffase 25 vorgesehen sein, in dem eine zweite Hubschlifffase 15b an die Rundschliffase 25 angrenzt und mit ihr eine gemeinsame zweite Kante 13; 13b besitzt.

Schließlich kann in dem Führungsabschnitt 57 eine dritte Hubschlifffase 15c vorgesehen sein, die an die Rundschliffase 25 angrenzt und mit ihr eine gemeinsame dritte Kante 13; 13c besitzt. In dem Führungsabschntt 57, der den überwiegenden Längenabschnitt der Länge L (vgl. Figur 5) der Rundschliffase 25 ausmacht, entspricht die Breite der Rundschliffase 25 vorzugsweise einer Grundbreite B, die die maximale Breite der Rundschliffase 25 festlegt und im Führungsabschntt 57 konstant ist.

In der perspektivischen Darstellung der Figuren 3 und 4 bilden die Kanten 13; 13a, 13b, 13c konvexe Außenkanten. Die erste, zweite und/oder dritte Hubschliffase 15; 15a; 15b; 15c sind somit Flächen bzw. Fasen, die durch Wegschleifen des Materials, aus dem das Bohrwerkzeug 50 besteht, gebildet sind. Dadurch fällt die Oberfläche der ersten, zweiten und/oder dritten Hubschliffase 15; 15a; 15b; 15c radial nach innen unter die Oberfläche der Rundschliffase 25 zurück. Im zweiten Längenabschnitt 20 (s. auch Figur 7), in dem die zweite Hubschliffase 15; 15b an die Rundschliffase 25 angrenzt, kann die Rundschliffase 25 wahlweise eine konstante Breite bzw. Zwischenbreite besitzen, die größer ist als die Fasenbreite bzw. der ansteigende Verlauf der Fasenbreite im ersten Längenabschnitt 10, aber kleiner ist als die Grundbreite B, d.h. als die maximale Breite der Rundschliffase 25, die die Rundschliffase 25 durchgehend im Führungsabschnitt 57 besitzt.

Aus der in Figur 4 weiter von vorn dargestellten Perspektive sind am hinteren Ende der ersten und zweiten Hubschliffase 15; 15a; 15b durch gestrichtelte Linien konkave Ränder bzw. Innenkanten angedeutet, denen jeweils eine Fläche bzw. ein Übergangsbereich mit einem entweder abrupten oder zumindest steileren Übergang der Fasenbreite b nachfolgt. Somit kann die Rundschlifffase 25 zwischen dem ersten und zweiten Längenabschnitt 10; 20 und/oder zwischen dem zweiten Längenabschnitt 20 und dem Führungsabschnitt 57 optional einen Übergangsbereich aufweisen, in dem ihre Fasenbreite b entweder abrupt oder zumindest steiler ansteigt als im ersten und/oder zweiten Längenabschnitt 10; 20.

Insbesondere kann die Fasenbreite der Rundschlifffase 25 im zweiten Längenabschnitt 20 konstant sein und beispielsweise einen bestimmten Bruchteil oder Prozentsatz derjenigen maximalen Breite, d.h. Grundbreite B betragen, die die Rundschlifffase 25 im Führungsabschnitt 57 besitzt, sodass die Führungsstabilität entlang der Rundschlifffase 25 beim Eindringen in den Werkstoff in zwei Stufen gesichert wird (wobei die erste Stufe infolge des ersten Längenabschnitts 10 kontinuierlich erreicht wird). Mit "Stufen" sind hier jedoch keine Bohrlochabschnitte unterschiedlicher Radien gemeint, denn der Bohrlochdurchmesser ist aufgrund der Länge L der bis ganz nach vorn durchlaufenden Rundschlifffase 25 in axialer Richtung konstant.

Alternativ kann die Fasenbreite der Rundschlifffase 25 im zweiten Längenabschnitt 20 auch weiter ansteigen.

Figur 5 zeigt schematisch vereinfacht das Bohrwerkzeug 50 in schematischer Seitenansicht, wobei die Länge L der Rundschlifffase 25 den Führungsabschnitt 57 sowie den ersten Längenabschnitt 10, in dem die Rundschlifffase 25 schmaler ist als im Führungsabschnitt 57, umfasst. Führungsabschnitt 57 und Schneidspitze 51 bilden zusammen das Schneidteil 55, das in axialer Richtung vor dem Schaft 59 des Bohrwerkzeugs 50 angeordnet ist.

Figur 6 zeigt ein gegenüber Figur 3 und 4 vereinfachtes Ausführungsbeispiel mit nur einer einzigen nachlaufenden Hubschlifffase 15; 15a und nur einem einzigen Bereich (nämlich den ersten Längenabschnitt 10), in dem die Fasenbreite b Rundschlifffase 25 variiert - und zwar monoton, insbesondere linear in Abhängigkeit von der Entfernung e von der Außenecke 22 der Hauptschneidkante 2. Anstelle einer monoton variierten Fasenbreite bm bzw. einer linear variierten Fasenbreite bl könnte auch ein anderweitig ansteigender Breitenverlauf der Fasenbreite b vorgesehen sein, in die letztendliche maximale Fasenbreite (Grundbreite) B übergeht. Zumindest aber im vordersten Bereich der Rundschlifffase 25, d.h. von ihrem vordersten Ende 26 aus, welches vorzugsweise mit der Außenecke 22 der Hauptschneidkante 2 zusammenfällt, besitzt die Rundschlifffase 25 erfindungsgemäß einen zunächst kontinuierlich ansteigenden Breitenverlauf ihrer Fasenbreite b - hier vorzugsweise außerdem beginnend mit der Fasenbreite Null.

Die komplexere Ausführungsform der Figuren 3 und 4 ist in Figur 7 dargestellt; analog zu Figur 6 wiederum in auschnittweiser und schematisch vereinfachter Seitenansicht auf die Rundschlifffase 25. Zwischen dem ersten Längenabschnitt 10 und dem Führungsabschnitt 57 umfasst die Rundschlifffase 25 ferner den zweiten Längenabschnitt 20, indem die Fasenbreite b (und somit auch die Führungsstabilität je Längserstreckung) auf einem ersten Niveau bzw. Zwischenwert gehalten wird, der hier konstant gewählt ist und einen bestimmten Bruchteil oder Prozentsatz der maximalen Fasenbreite B im nachfolgenden Führungsabschnitt 57 beträgt. Wiederum beginnt die Rundschlifffase 25 von ihrem vorderen Ende 26 aus (also axial nach hinten, d.h. in Richtung zunehmender Entfernung e von der Hauptschneidkante 2 bzw. deren Außenecke 22) mit einem kontinuierlichen Anstieg der Fasenbreite b bzw. bm oder bl. Steilere Verläufe der Fasenbreite b sind allenfalls in Übergangsbereichen zwischen den drei Längenabschnitten 10, 20, 57 vorgesehen. Die zweite Hubschlifffase 15; 15b läuft dem Abschnitt konstanter Fasenbreite bzw. Fasenzwischenbreite in Drehrichtung nach. Am kreiszylindrischen Außenrand im Außenradius R der Bohrlochwandung 60 befindet sich somit nur die Rundschlifffase 25 (beginnend mit der Nebenschneidkante 12). Somit besitzt das Bohrwerkzeug 50 an seinem Außenumfang in Höhe der Außenecke 22 der Hauptschneidkante 2 - und hier somit zugleich in Höhe des vorderen, spitzen Endes 26 der Rundschlifffase 25 - eine axiale Verlängerung eines Zwischenabschnitts 20, sodass der vordere, erste Längenabschnitt 10 eine nach vorn auslaufende Verlängerung dieses Zwischenabschnitts 20 bildet.

Das erfindungsgemäße Bohrwerkzeug, insbesondere gemäß den Ausführungsbeispielen der Figuren 3, 4, 6 und 7, ist vorzugsweise so gestaltet, dass im Bereich der Außenecke 22 der Hauptschneidkante 2 die vorauslaufende Spannut 9 auf Kosten der Fasenbreite b der Rundschlifffase 25 in Richtung der nachlaufenden ersten Hubschlifffase 15a verbreitert ist. Insbesondere können die Hauptschneidkante 2 und/oder die Nebenschneidkante 12 im Bereich der Außenecke 22 in Richtung der nachlaufenden ersten Hubschlifffase 15a gekrümmt sein. Dies entspricht beispielsweise der in Figur 2 erkennbaren Krümmung der Hauptschneidkante 2 und/oder der in Figur 4 erkennbaren Krümmung der Nebenschneidkante 12, wodurch das vordere Ende 26 sich verschmälert, bis es als spitzes Ende (und/oder als Außenecke 22 der Hauptschneidkante 2) mit der Ecke der vordersten, ersten umfangsseitigen Hubschlifffase 15; 15a zusammenfällt. Dies kann durch einen geeignet angepassten Drall- bzw. Spiralwinkel realisiert werden. Durch das spitze vordere Fasenende 26 der Rundschlifffase 25 wiederum kann der zu wählende Radius der Hubschlifffase 15; 15a vermessen und eingestellt werden.

Die Darstellungen in den Figuren 6 und 7 sind spiralförmit entzerrt; während horizontal die axiale Koordinate aufgetragen ist, ist die Darstellung bezüglich der vertikalen Koordinate (wahlweise als azimutaler Umfangsabschnitt oder als aimutaler Drehwinkel) so entzerrt, dass die Nebenschneidkante 2 und die Rundschlifffase 25, die am realen Bohrer bzw. Bohrwerkzeug 50 eigentlich der Spiralform der Spannut bzw. Spanfläche folgen, nicht mehr schräg geneigt, sondern horizontal aufgezeichnet sind.

Im Übrigen ist von den Außenecken 22 der Hauptschneidkanten 2 beginnend über die gesamte Länge der nachfolgenden Rundschlifffasen 25, d.h. über die gesamte Bohrlochtiefe der Radius R bzw. der Durchmesser des Bohrlochs konstant.

## Patentansprüche

1. Bohrwerkzeug (50) zum Bearbeiten von Verbund- und anderen Materialien, umfassend einen Schaft (59) und ein Schneidteil (55) mit:
- einer Schneidspitze (51) mit vorderseitigen Hauptschneidkanten (2),
- radial außenliegenden Nebenschneidkanten (12),
- Rundschlifffasen (25) und
- zumindest in der Nähe der Schneidspitze (51) ausgebildeten Hubschlifffasen (15; 15a, 15b) mit einem Freiwinkel gegenüber einem Außenradius (R) des Bohrwerkzeugs (50),
- wobei die Rundschlifffasen (25) an die Nebenschneidkanten (12) angrenzen und ihnen in Drehrichtung nachlaufen und wobei die Hubschlifffasen (15; 15a, 15b) an die Rundschlifffasen (25) angrenzen und ihnen in Drehrichtung nachlaufen,
- wobei die Rundschlifffasen (25) eine Fasenbreite (b) besitzen, die über zumindest einen Teil ihrer Länge (L) variiert, und
- wobei das vordere Ende (26) der jeweiligen Rundschlifffase (25) mit einer nicht-konstanten, mit zunehmender Entfernung (e) von der Schneidspitze (51) ansteigenden Fasenbreite (bm) beginnt.

2. Bohrwerkzeug (50) nach Anspruch 1, **dadurch gekennzeichnet, dass** das vordere Ende (26) der jeweiligen Rundschlifffase (25) mit einer mit zunehmender Entfernung (e) von der Schneidspitze (51) linear ansteigenden Fasenbreite (bl) beginnt.

3. Bohrwerkzeug (50) nach Anspruch 1 oder 2, **dadurch gekennzeichnet, dass** das vordere Ende (26) der jeweiligen Rundschlifffase (25) an der jeweiligen Hauptschneidkante (2) oder zumindest an einer Außenecke (22) der jeweiligen Hauptschneidkante (2) angeordnet ist.

4. Bohrwerkzeug (50) nach einem der Ansprüche 1 bis 3, **dadurch gekennzeichnet, dass** das vordere Ende (26) der Rundschlifffasen (25) mit einer Fasenbreite von Null, d.h. mit einem spitzen Fasenende beginnt.

5. Bohrwerkzeug (50) nach einem der Ansprüche 1 bis 4, **dadurch gekennzeichnet, dass** die monoton und/linear ansteigende Fasenbreite (bm; bl) sich zumindest über einen vordersten, ersten Längenabschnitt (10) der Rundschlifffase (25) erstreckt, der an eine nachlaufende erste Hubschlifffase (15a) angrenzt.

6. Bohrwerkzeug (50) nach Anspruch 5, **dadurch gekennzeichnet, dass** im Bereich der Außenecke (22) der jeweiligen Hauptschneidkante (2) die vorauslaufende Spannut (9) auf Kosten der Fasenbreite (b) der Rundschlifffase (25) in Richtung der nachlaufenden ersten Hubschlifffase (15a) verbreitert ist.

7. Bohrwerkzeug (50) nach Anspruch 5 oder 6,
**dadurch gekennzeichnet, dass** im Bereich der Außenecke (22) der jeweiligen Hauptschneidkante (2)
- die Hauptschneidkante (2) und
- die Nebenschneidkante (12)
in Richtung der nachlaufenden ersten Hubschlifffase (15a) gekrümmt sind.

8. Bohrwerkzeug (50) nach einem der Ansprüche 5 bis 7, **dadurch gekennzeichnet, dass** die erste Hubschlifffase (15a) gegenüber der vorderseitigen axialen Richtung (a) des Bohrwerkzeugs (50) so verkippt ist, dass sie sich mit abnehmender Entfernung (e) von der Schneidspitze (51) und/oder von der Hauptschneidkante (2) immer weiter an die vorauslaufende Nebenschneidkante (12) annähert.

9. Bohrwerkzeug (50) nach einem der Ansprüche 5 bis 8, **dadurch gekennzeichnet, dass** die erste Hubschlifffase (15a) sich über einen azimutalen Winkelbereich erstreckt, der einen zwischen benachbarten Spannuten (9) verbleibenden azimutalen Winkelbereich oder zumindest einen überwiegenden Anteil dieses azimutalen Winkelbereichs umfasst.

10. Bohrwerkzeug (50) nach einem der Ansprüche 5 bis 9, **dadurch gekennzeichnet, dass**
- sowohl eine Ecke der jeweiligen ersten Hubschlifffase (15a) als auch
- das spitze Fasenende der jeweiligen Rundschlifffase (25) an der Außenecke (22) der jeweiligen Hauptschneidkante (2) angeordnet ist.

11. Bohrwerkzeug (50) nach einem der Ansprüche 5 bis 10, dass die jeweilige Rundschlifffase (25) zwischen
- dem ersten Längenabschnitt (10) und
- einem zwischen der Schneidspitze (51) und dem Schaft (59) angeordneten, bis zum Schaft (59) reichenden Führungsabschnitt (57) des Bohrwerkzeugs (50)
einen zweiten Längenabschnitt (20) aufweist, in dem die Fasenbreite der Rundschlifffase (25) größer ist als in dem ersten Längenabschnitt (10), aber kleiner als im Führungsabschnitt (57),
wobei die Fasenbreite der Rundschlifffase (25) im Führungsabschnitt (57) einer konstanten, maximalen Grundbreite (B) der Rundschlifffase (25) entspricht.

12. Bohrwerkzeug (50) nach Anspruch 11, **dadurch gekennzeichnet, dass** die Fasenbreite der Rundschlifffase (25) in dem zweiten Längenabschnitt (20) konstant ist oder mit zunehmender Entfernung (e) von der Schneidspitze (51) weiter monoton ansteigt.

13. Bohrwerkzeug (50) nach Anspruch 11 oder 12, **dadurch gekennzeichnet, dass** die Rundschlifffase (25) in dem zweiten Längenabschnitt (20) an eine nachlaufende zweite Hubschlifffase (15b) angrenzt.

14. Bohrwerkzeug (50) nach Anspruch 13, **dadurch gekennzeichnet, dass** die zweite Hubschlifffase (15b) sich über einen azimutalen Winkelbereich erstreckt, der höchstens ein Drittel, vorzugsweise höchstens ein Achtel des von der ersten Hubschlifffase (15a) eingenommenen azimutalen Winkelbereichs beträgt.

15. Bohrwerkzeug (50) nach Anspruch 13 oder 14, **dadurch gekennzeichnet, dass** in einem zwischen der Schneidspitze (51) und dem Schaft (59) befindlichen Führungsabschnitt (57) die Rundschlifffase (25)
- durch eine dritte Kante (13c) von einer angrenzenden, nachlaufenden dritten Hubschlifffase (15c) oder
- durch eine Stufe (17) von einer radial rückversetzten Grundfläche (18) getrennt ist.

16. Bohrwerkzeug (50) nach Anspruch 15, **dadurch gekennzeichnet, dass** die zweite Hubschlifffase (15b) eine solche Hubschlifffase ist, die in dem zweiten Längenabschnitt (20) durch bereichsweises Wegschleifen der dritten Kante (13c) oder der Stufe (17) gebildet ist.

17. Bohrwerkzeug (50) nach einem der Ansprüche 11 bis 16, **dadurch gekennzeichnet, dass** die Breite der Rundschlifffasen (25)
- in einem Übergangsbereich zwischen dem ersten (10) und dem zweiten Längenabschnitt (20) und/oder
- in einem Übergangsbereich zwischen dem zweiten Längenabschnitt (20) und einem Führungsabschnitt (57) konstanter, maximaler Grundbreite (B) der Rundschlifffasen (25)
abrupt oder zumindest steiler ansteigt als innerhalb des ersten (10) und zweiten Längenabschnitts (20).
